# EUROPEAN PATENT APPLICATION

(11) **EP 0 682 233 A2**
(43) Date of publication of application: **15.11.1995**
(21) Application number: 95303185.3
(22) Date of filing: 11.05.1995
(51) Int. Cl.: G01F 1/58, G01F 1/66

(54) **A liner for determining characteristics of fluid within a conduit**

(30) Priority: 13.05.1994 GB 9409669
(71) Applicant: PEEK MEASUREMENT LTD., Hampshire, SO23 7QA (GB)
(72) Inventor: Gibbard, David W., Chandlers Ford, Hampshire, SO53 1TG (GB); Mason, Peter F., Titchfield Common, Fareham, PO14 4ND (GB)
(74) Representative: Sturt, Clifford Mark

(57) **Abstract**

The invention provides a liner (1) for insertion into a pipe (4) to determine requisite characteristics of fluid within that pipe (4). The liner (1) comprises a flexible lining (3) within which are embedded elements (2) for determining the required characteristics.

The liner (1) minimises the blocking effect of the elements (2). Moreover, since the elements (2) do not protrude within the pipe (4), debris can flow along the liner (1) without becoming entangled.

## Description

The present invention relates to determining characteristics of fluid within a conduit. In particular, it relates to a manner of introducing into a conduit, such as a sewer pipe, circuitry for determining characteristics of fluid within that conduit.

It is an object of the present invention to provide a manner of introducing into a conduit, circuitry for determining characteristics of fluid within that conduit, such that it would have a minimal blocking effect.

It is a further object of the present invention to provide a manner of introducing into a conduit, circuitry for determining characteristics of fluid within that conduit, such that protrusions resulting from the circuit elements within the conduit are minimised, thus reducing the mitigating tendency for a blockage to occur as a result of protrusions becoming entangled with debris flowing through the conduit and also reducing the possibility of the fluid flow through the conduit being disturbed.

According to one aspect of the present invention there is provided a liner for a fluid carrying conduit, comprising a flexible lining and elements for determining characteristics of fluid internal the conduit, arranged within the lining.

According to another aspect of the present invention there is provided a method of manufacturing a liner for a fluid carrying conduit, comprising arranging elements for determining characteristics of fluid internal the conduit within a lining.

According to a further aspect of the present invention there is provided a method of installing in a conduit means for determining characteristics of fluid within the conduit, comprising inserting a liner according to the present invention into the conduit.

Embodiments of the present invention will now be described, by way of example, with reference to the accompanying drawings, in which:

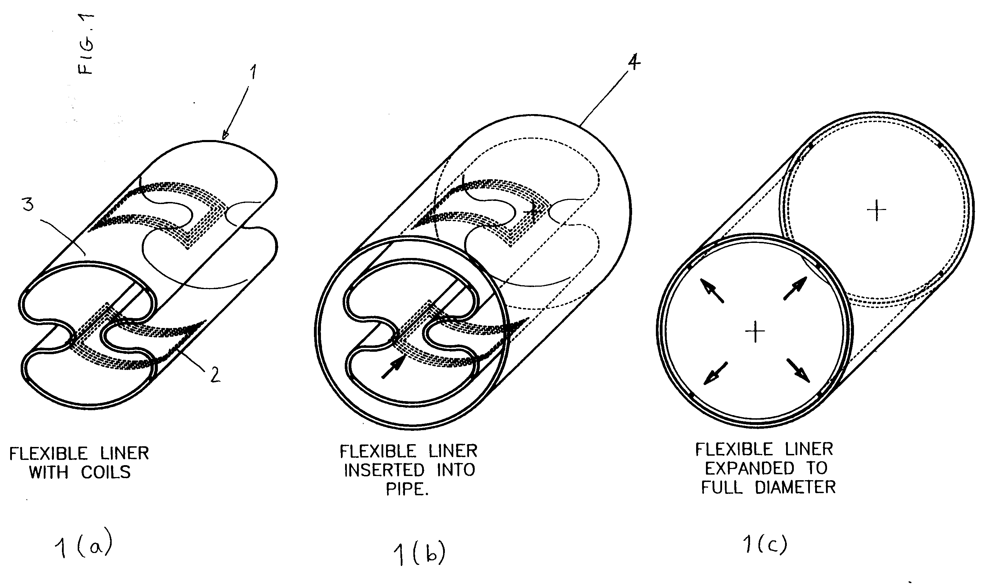

Figure 1 illustrates a method of inserting fixed elements of an electromagnetic liquid flow meter into a pipe according to an embodiment of the present invention.

Figure 1 shows the insertion of elements of an electromagnetic flow meter, namely coils, into a pipe for measuring the liquid flow in the pipe. Figure 1(a) shows a liner 1 comprising coils 2 embedded in a flexible lining 3. This lining may be the same as that used for repairing and reconstructing sewers and fluid carrying conduits. Preferably, it is a soft woven or felt fabric tube.

In a preferred embodiment, the liner 1 is of laminated structure. It comprises layers of lining 2 sandwiching various electromagnetic flow meter elements. Such elements may include the coil 3, sense electrode mounts and connectors. Alternatively, they may include the coil 3, sense electrodes and connectors.

The liner 1 may comprise elements of alternative circuits or a combination of circuits. Alternatives include ultrasonic flow meters and depth measurers. In the case of an ultrasonic flow meter, elements may include transmit and receive transducers or transducer arrays.

The liner 1 is preferably impregnated with a resin which may be set hard either by heat or by the use of a catalyst.

Figure 1(b) shows the liner 1 having been inserted into a pipe 4 to be metered. To enable the liner 1 to be inserted into the pipe 4 it may be contracted by folding. Once in place, it may then be expanded to fit the pipe 4. (Figure 1(c)). Any impregnation is allowed to harden, so as to leave the liner 1 in intimate contact with the pipe 4. Any elements required to be external the liner 1 may then be attached to their appropriate connections within the liner 1. For example, sense electrodes may be connected to respective mounts within the liner 1.

Since the majority, if not all, of the elements of the electromagnetic flow meter are within the liner 1, the blocking of fluid, debris etc. by the flow meter is minimised. Moreover, the innermost lining 3 of the liner 1 enables debris to flow smoothly along the liner 1 without becoming entangled with any protrusions resulting from elements of the flow meter.

## Claims

1. A liner for a fluid carrying conduit, comprising:
a flexible lining; and
elements for determining characteristics of fluid inside the conduit, arranged within the lining, wherein, in use, the elements do not extend into the fluid flow path of the conduit.

2. A liner as claimed in claim 1, wherein the lining comprises laminated layers and the elements are sandwiched between the laminated layers.

3. A liner as claimed in claim 1 or 2, wherein the lining comprises a woven fabric.

4. A liner as claimed in claim 1 or 2, wherein the lining comprises a felt material.

5. A liner as claimed in any preceding claim, wherein the elements comprise field coils and mounts for sense electrodes for forming part of an electromagnetic flow meter.

6. A liner as claimed in any of claims 1 to 4, wherein the elements comprise field coils and sense electrodes for forming part of an electromagnetic flow meter.

7. A liner as claimed in any of claims 1 to 4, wherein the elements comprise a transmitter and/or receiver transducer for forming part of an ultrasonic flow meter.

8. A liner as claimed in any of claims 1 to 4, wherein the elements comprise a transducer array for forming part of an ultrasonic flow meter.

9. A liner as claimed in any preceding claim, wherein the elements comprise part of a depth measurer.

10. A liner as claimed in any preceding claim, further comprising a resin adapted to set hard.

11. A method of manufacturing a liner for a fluid carrying conduit, comprising arranging elements for determining characteristics of fluid internal the conduit within a flexible lining such that in use the elements would not extend into the fluid flow path of the conduit.

12. A method as claimed in claim 11, wherein the lining comprises laminated layers and the elements are arranged between the laminated layers.

13. A method as claimed in claim 11 or 12, further comprising impregnating the lining with a resin adapted to set hard.

14. A method of installing in a conduit means for determining characteristics of fluid within the conduit, comprising inserting a liner as claimed in any of claims 1 to 10 into the conduit.

15. A method as claimed in claim 14, further comprising expanding the liner to fit the inner wall of the conduit.

16. A method as claimed in claim 14 or 15, when dependent upon claim 10, further comprising setting the resin in the liner by heat or by use of a catalyst.

17. A method as claimed in claim 16, when dependent upon claim 5, further comprising mounting sense electrodes on the mounts.
